# EUROPEAN PATENT SPECIFICATION

(11) **EP 1 230 634 B1**
(45) Date of publication and mention of the grant of the patent: **25.08.2010**
(21) Application number: 00966747.8
(22) Date of filing: 19.09.2000
(51) Int. Cl.: G09B 23/32

(54) **CPR MANIKIN WITH OPTIONAL AUTOMATIC EXTERNAL DEFIBRILLATION**
PHANTOM FÜR DIE CARDIOPULMONÄRE WIEDERBELEBUNG MIT WAHLWEISER EXTERNER DEFIBRILATION
MANNEQUIN DE REANIMATION CARDIO-RESPIRATOIRE EQUIPE D'UN SYSTEME DE DEFIBRILLATION EXTERNE AUTOMATIQUE

(30) Priority: 18.11.1999 US 442508; 02.06.2000 US 586283
(43) Date of publication of application: 14.08.2002
(73) Proprietor: General Electric Company, Schenectady, NY 12345 (US)
(72) Inventor: BRAULT, Richard, A., Toronto, Ontario M5V 1Y4 (CA); CROTEAU, Diane, B., Toronto, Ontario M5V 1Y4 (CA)
(74) Representative: Grünecker, Kinkeldey, Stockmair & Schwanhäusser Anwaltssozietät
(86) International application number: PCT/US2000/025603
(87) International publication number: WO 2001/037243

(56) References cited:
- GB-A- 1 250 059
- US-A- 3 199 225
- US-A- 5 423 685

## Description

### Cross-Reference to Related Applications

This application is a continuation-in-part application of application Serial No. 09/442,508 filed November 18, 1999, entitled CPR MANIKIN WITH OPTIONAL AUTOMATIC EXTERNAL DEFIBRILLATION, Richard A. Brault and Dianne B. Croteau, inventors, and assigned to the same assignee as the present application.

### Background of the Invention

This invention relates generally to a manikin for teaching and practicing cardiopulmonary resuscitation (CPR) and which CPR manikin, if desired, may also provide the feature of teaching and practicing automatic external defibrillation (AED). This invention further relates to apparatus for simulating the human head.

Numerous CPR manikins are known to the prior art. The prior art CPR manikins range from the very complex including numerous component parts which make the manikin very expensive to very simplistic CPR manikins which include few parts and are relatively inexpensive but which do not always permit the teaching and practice of all the techniques for CPR.

Document US 3,199,225 discloses an apparatus for simulating the human head on a CPR mannequin, wherein the unhygienic mouth contact with the apparatus and reaching of blown-in air in the apparatus are prevented. Therefore, a mask is adapted on a first head means. Every trainee on the training apparatus gets their own mask, so that the hygiene is retained. During the practice of the method of a mouth-to-mouth breathing, the blown-in air of the trainee only enters the interior of a balloon, but not the principle air compartment and passages of the apparatus. If a trainee blows into the mouth opening of the mask, the air is blown into the balloon, which thus constitutes the expansible diaphragm and displaces a like amount of air in a chamber exteriorly of the balloon. This displaced air is transmitted to an expansible flexible bag that raises the upper chest member, thus indicating insufflation and lowers when the trainee removes his mouth from the mouth opening. Since the mask is only secured to the face surface of the apparatus by some formation, it can easily slip off the apparatus. On the other hand, if the mask is tightened to the head means, it might be difficult to remove it from same. Thus, unhygienic states may occur.

Document GB 1 250 059 shows an educational aid comprising a plurality of leaves. Each leaf forms the structure of a human body. A student may perform a coloring of the leaf according to the various components explained by the teacher, and the student can make a detailed examination of the model. The educational aid may also provide a representation of sectionalized views through complicated anatomical details difficult to understand. The leaves can be stacked in a way that is convenient for use and storage.

Generally, to be desirable and acceptable, CPR manikins must have sufficient structural elements to permit people to teach and practice the proper sequence of steps in the practice of CPR, must provide sufficient realism and feed back to the student learning CPR, and must be hygienic and easy to clean. Such sequence of steps in the practice of CPR, as known to those skilled in the art of teaching and practicing CPR utilizing a CPR manikin, includes chest compression, head tilts, jaw thrusts, and abdominal compression.

Recent advances in technology have made AED more accessible to the general public. Defibrillators are now seen in public venues, on aircraft, ships, and the like. The American Red Cross and the American Heart Association have created training programs particularly catering to the widespread teaching of AED as a component of the standard CPR training course. Most CPR and AED training programs given by the American Red Cross and the American Heart Association take place in workplaces such as offices and factories. As such, CPR and AED instructors must carry the CPR manikins and other equipment to the training site. CPR manikin portability and compactness are therefore important factors for instructors who, to be efficient, must bring as many CPR manikins as possible to the training site to increase the overall efficiency of the class, and desirably, provide each student with their own CPR manikin. More CPR manikins save time, make the teaching of CPR more efficient and more personal to each student, and lower the cost of teaching.

Accordingly, there is a need in the art for a relatively simple, low-cost CPR manikin that provides for the teaching and practice of the proper sequence of steps for practicing CPR including advanced techniques such as, for example, jaw thrusts.

There is a further need in the art for a CPR manikin which facilitates the placement thereon of AED electrodes for teaching AED in combination with CPR training.

There is a still further need in the art for a CPR manikin that is light weight, easily assembled and disassembled, whose parts are stackable and light weight to facilitate and reduce the cost of transportation and storage

Further, there is a need in the art for a CPR manikin whose component parts are made of a material that can be recycled at the end of its functional life allowing the material to be re-used and kept in the service of industry thereby avoiding landfill and/or incineration environmental problems.

Numerous apparatus are known to the art for simulating the human head. Simulations of the human head have many applications, such as, for example, in the teaching of the structure and function of elements comprising the human head such as the jaw. Human head simulations are used widely in various types of manikins including CPR manikins. Accordingly there is a need in the art for a new and improved apparatus simulating the human head which is relatively simple, low cost, and which can be readily and easily disassembled for cleaning and which can be disassembled for stacking to facilitate transport and storage.

### Summary of the Invention

The objects of the present invention are to satisfy the foregoing needs in the art.

The apparatus for simulating the human head and satisfying certain other of the foregoing needs includes the features of claim 1.

The apparatus for practicing cardiopulmonary resuscitation (CPR) which satisfies certain of the foregoing needs includes the features of claim 3. A further apparatus is defined in claim 7.

### Description of the Drawings

FIG. 1 is a perspective view of a fully assembled CPR manikin embodying the present invention;
FIG. 2 is an exploded view of the CPR manikin shown in FIG. 1;
FIG. 3 illustrates the vertical stacking of the torso and neck components of the CPR manikin of the present invention to facilitate storage and transportation;
FIG. 4 is a perspective view illustrating the present combination invention including the CPR manikin of the present invention and a plurality of AED electrodes and FIG. 4 illustrates the proper placement of the AED electrodes on the chest plate and chest components comprising the CPR manikin of the present invention;
FIG. 5 is a cross-sectional view taken generally along the line 5-5 in FIG. 2 in the direction of the arrows;
FIG. 6 is an exploded diagrammatical view, in cross-section, illustrating the fastening of the chest plate and lung components to the chest component of the CPR manikin of the present invention using a pair of snap fit members;
FIG. 6A shows an alternative pair of snap fit members;
FIG. 7 is an exploded view showing in perspective the two components comprising the head apparatus of the present invention for simulating the human head;
FIG. 8 is a perspective view of the head apparatus of the present invention shown in FIG. 7 and illustrating the manner of use of a protective shield in connection with such head apparatus;
FIG. 9 is a generally plan view of one component of the head apparatus of the present invention and shows this head component unfolded into a generally flat position facilitating the vertical stacking of a plurality of these components to facilitate storage and transportation;
FIG. 10 illustrates a plurality of the head components shown in FIG. 9 stacked or nested in a vertical stack to facilitate storage and transportation;
FIG. 11 is a diagrammatical illustration of the manner in which the head apparatus of the present invention may be utilized to perform jaw thrusts in the practice of CPR;
FIG. 12 is a diagrammatical illustration showing the inflation of the lung and the chest rise of the CPR manikin of the present invention; and
FIG. 13 is a generally plan view of an alternate embodiment of one component of the head apparatus of the present invention and shows this head component generally flat and with the two structural elements comprising this component shown separated for clarity of presentation.

### Detailed Description of the Preferred Embodiment

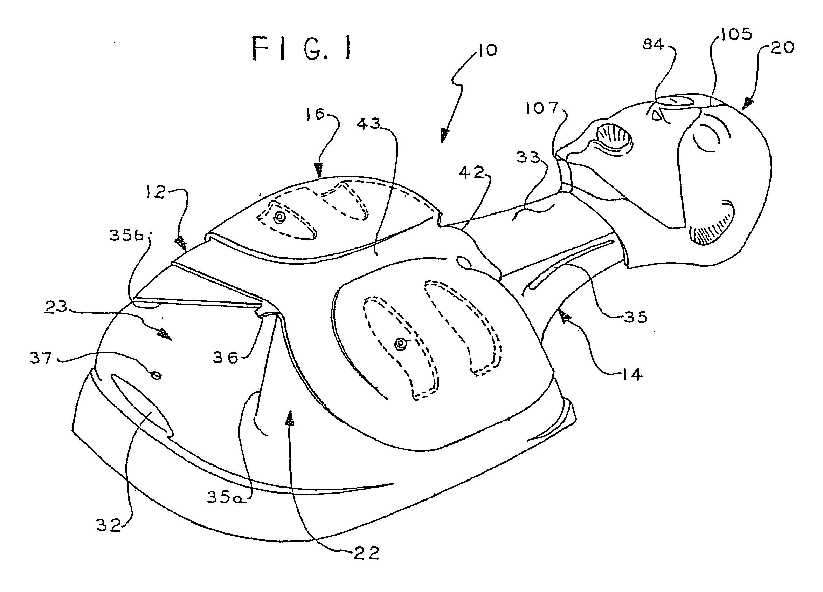

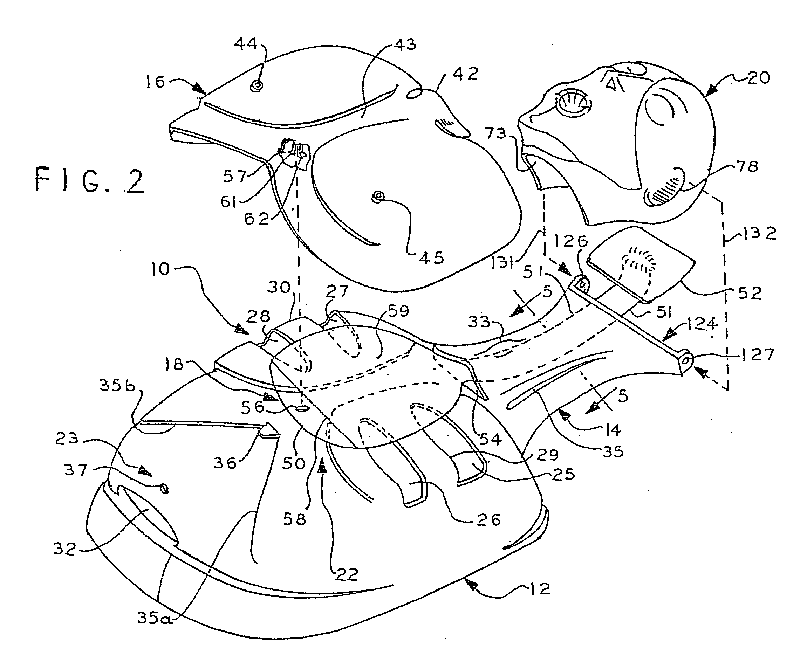

Referring to FIGS. 1 and 2, a CPR manikin embodying the present invention is shown and indicated by general numerical designation 10. CPR manikin 10 includes a torso indicated by general numerical designation 12 and which includes an integrally formed neck indicated by general numerical designation 14, a chest plate indicated by general numerical designation 16, a lung indicated by general numerical designation 18 (FIG. 2) and a head indicated by general numerical designation 20; it will be understood that the lung 18 is not shown in FIG. 1 because the end portion of the lung which extends outwardly of the mouth would obscure some of the manikin features shown in FIG. 1, particularly the mouth.

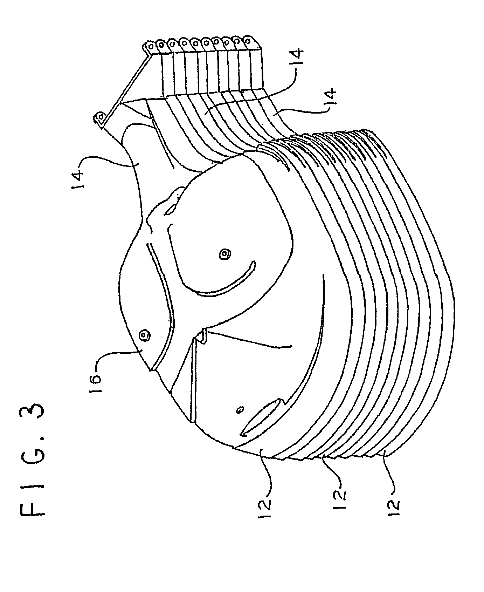

The torso 12, FIGS. 1 and 2, is a single half shell with tapered sides, completely open on the underside, allowing for efficient stacking to facilitate storage and transportation; alternatively, the torso 12 may be understood to be a generally semi-spherical hollow dome completely open at the bottom. As shown in FIG. 3, a plurality of torsos 12 and integrally formed necks 14, with the breast plates 16 attached to the torsos in a manner described in detail below, may be stacked vertically as shown in FIG. 3 for convenience of storage and transportation. The torso 12 may be made from suitable light weight and resilient plastic, such as for example polypropylene, for repeated chest compressions in the practice of CPR, and may be made by suitable manufacturing techniques known to the art such as by injection molding; in the preferred embodiment, the torso 12 and neck 14 are formed integrally and hence the neck 14 will be formed of the same light weight resilient material as the torso 12. The torso 12, particularly FIG. 2, includes a chest portion indicated by general numerical designation 22 and an abdominal portion indicated by general numerical designation 23. As shown particularly in FIG. 2, the torso chest portion 22 includes pairs of generally opposed slots 25 and 26 and 27 and 28. These slots provide ribs 29 and 30, respectively, therebetween and these slots and ribs allow the material, e.g. the above-noted polypropylene, comprising the chest portion 12, to flex much like a human rib cage does during chest compressions. The abdominal portion 23 of the torso 12, FIGS. 1 and 2, may be provided with an abdominal slot 32 causing the abdominal portion 23 to flex during the practice of abdominal thrusts in the teaching and practice of CPR. It has been found that by making the torso 12 of polypropylene, such material allows for repeated compressions of the chest and abdomen without material fatigue or memory loss.

It will be further understood that the torso 12 of the present invention includes other anatomical features enhancing its usability in the teaching and practice of CPR, such as for example, neck portion 14 is provided on its opposed sides with an upwardly extending protrusion 33 simulating the human Adam's apple. Also, the neck 14 is provided with a pair of opposed and inwardly extending grooves 35, only one being shown in FIGS. 1 and 2, but it will be understood that another such groove 35 is provided on the opposite side of the neck 14, and which grooves simulate the carotid arteries extending along the sides of the neck of a human being. Further, the torso chest portion 22 is provided with a lowermost rib lines 35a and 35b, an outwardly and upwardly generally trapezoidally shaped protrusion 36 simulating the xiphoid process of the human sternum, and a generally circular indentation 37 in the torso abdominal portion 23 simulating the human navel; these anatomical simulations are included to assist and bring realism to the teaching and practice of CPR with the CPR manikin 10.

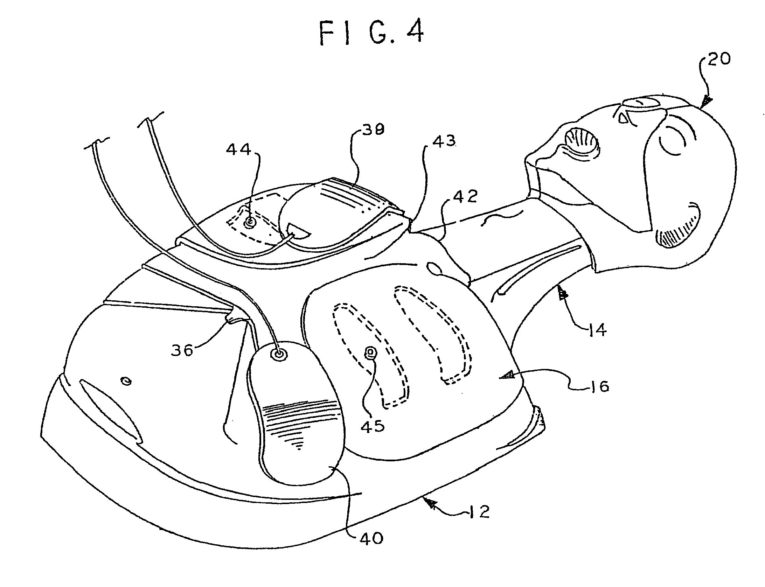

The chest plate 16, note particularly FIG. 2, is generally substantially planar but has downwardly tapered sides and is complementary in size and shape to, and for engagement with, the torso chest portion 22. The upper portion of the chest plate 16 may be provided with an outwardly extending protrusion 42 simulating the human collar bone. As will be understood from FIGS. 2 and 4, and in accordance with the teachings of the present invention, the overall shape of the chest plate 16 and torso 12 allows for and facilitates the proper placement of AED electrodes, such as electrodes 39 and 40 shown in FIG. 4, on the chest plate and torso. More particularly, the chest plate 16, note FIG. 2, is provided with anatomical landmarks or structural features, namely, the protrusion 42 simulating the human collar bone, a recess or depression 43 simulating the human sternum, and a pair of outwardly extending protrusions 44 and 45 simulating the human nipples, to facilitate proper placement of the AED electrodes 39 and 40 on the chest plate 16 and torso 12 as illustrated in FIG. 4.

The chest plate 16 may be made of a suitable light weight and flexible plastic such as for example polypropylene, and may be made by suitable manufacturing techniques known to the art such as injection molding. If desired, the chest plate 16 may be molded from transparent, or at least substantially transparent, polypropylene so that the ribs 29 and 30 (FIG. 2) remain visible after assembly of the chest plate to the torso. If desired, the underside of the chest plate 16 may be molded to include integrally formed stiffening ribs and the wall thickness of the chest plate 16 may be varied to optimize stiffness and flexibility. During chest compressions, the chest plate 16 flexes in concert with the torso chest portion 22 and provides realistic chest compliance to the teacher and student practicing CPR with the CPR manikin 10.

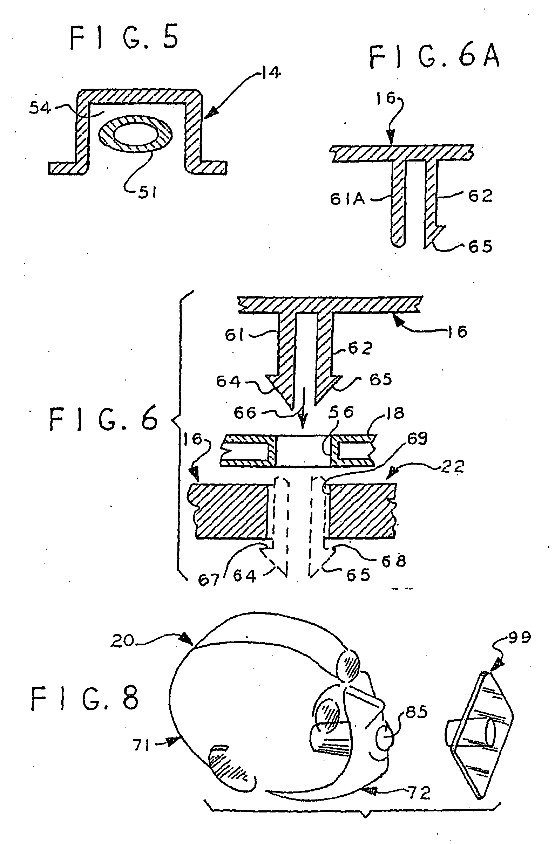

The lung 18, FIG. 2, is of hollow, generally flat construction or configuration and may be made, for example, of extruded and blown polyethylene film. The lung 18 includes an enlarged, closed and generally circular end portion 50, a generally elongated intermediate portion 51, shown mostly in dashed outline in FIG. 2, and an open end portion 52. It will be understood from FIG. 2 that the torso chest portion 22 adjacent or integral with the neck 14 is provided with a lung opening 54 through which the lung intermediate portion 51 passes as it extends and resides under the neck 14. As will be understood from FIG. 5, the neck 14 is of a generally inverted U-shaped configuration providing an open channel 54 in which the lung intermediate portion 51 resides. As will be understood from FIG. 2, the generally circular closed end portion 50 of the lung 18 is provided with a transverse seal 58 extending thereacross and sealing the top and bottom layers of the lung together to separate the closed end portion into a bottom end mounting portion 58 through which a mounting hole 56 extends and into an air chamber portion 59 in fluid communication with the intermediate lung intermediate portion 51 and the open lung end portion 52.

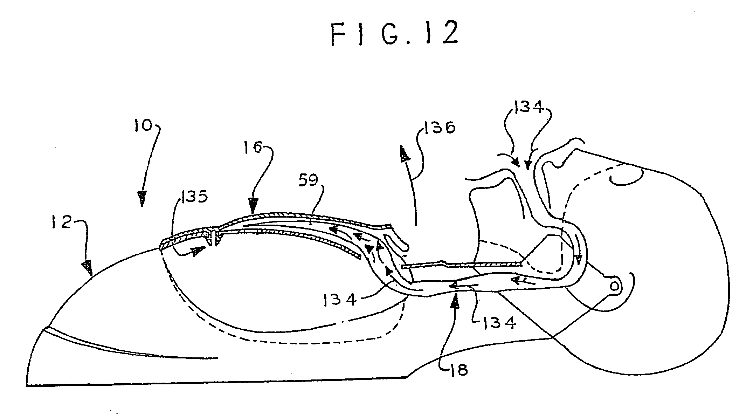

It will be understood from FIG. 2, and from the irregular shaped diagrammatical opening 57 shown in the chest plate 16, that the underside of the lower portion of the chest plate 16 is provided with a pair of downwardly extending flexible snap fit members 61 and 62; the snap fit members 61 and 62 may be formed integrally with the chest plate 16 or may be formed separately and suitably bonded or adhered thereto using a suitable plastic adhesive. Although not shown in FIG. 2, it will be understood, and as is illustrated diagrammatically in FIG. 6, that the torso chest portion 22 is provided with a mounting hole 69 extending therethrough. It will be understood, and referring to FIG. 6, that the snap fit members 61 and 62 are flexible because they are made of the same flexible material as the chest plate 16 as described above. The snap fit members 61 and 62 are provided with opposed inclined respective camming surfaces 64 and 65 and to assemble or snap fit the chest plate 16 and lung 18 to the torso chest portion 22, the snap fit members 61 and 62 are forced downwardly as indicated downwardly by the arrow 66 in FIG. 6 to extend through the mounting hole 56 formed in the lung 18 and downwardly and into engagement with the portions of the torso chest 22 surrounding the mounting hole 69 to cause the flexible snap members 61 and 62 to flex inwardly permitting them to be forced further downwardly until the camming surfaces 64 and 65 and the latching surfaces 67 and 68 reside underneath the torso chest portion 22 after which the flexible snap members 61 and 62 expand outwardly causing the horizontal latching surfaces 67 and 68 to latch underneath the inner surface of the torso chest portion 22 thereby snap fitting or fastening the chest plate 16 and the lung 18 to the chest portion 22 of the torso 12 The lung 18 and chest plate 16 can be easily and quickly removed from the torso 12 by manually squeezing the camming members 64 and 65, FIG. 6, together and pulling the chest plate 16 and snap fit members 61 and 62 upwardly opposite the direction of the arrow 66. It will be understood that because the snap fit members 61 and 62 are located on the lower portion of the chest plate 16, upon the chest plate 16 and lung 18 being snap fitted to the torso 12 as described above, and upon the air chamber portion 59 of the lung 18 being inflated, as described in detail below, the chest plate 16 will be permitted to rise or move up off the torso 12 as shown in FIG. 12, whereby it will be understood that the snap fit members 61 and 62 mount the chest plate 16, namely the lower portion, pivotally to the torso 12. An alternate pair of snap fit members 61A and 62 are shown in FIG. 6A. Only snap fit member 62 is provided with a camming member, member 65; otherwise the snap fit members 61A and 62 perform the same, or at least substantially the same, function as the snap fit members 61 and 62 of FIG. 6.

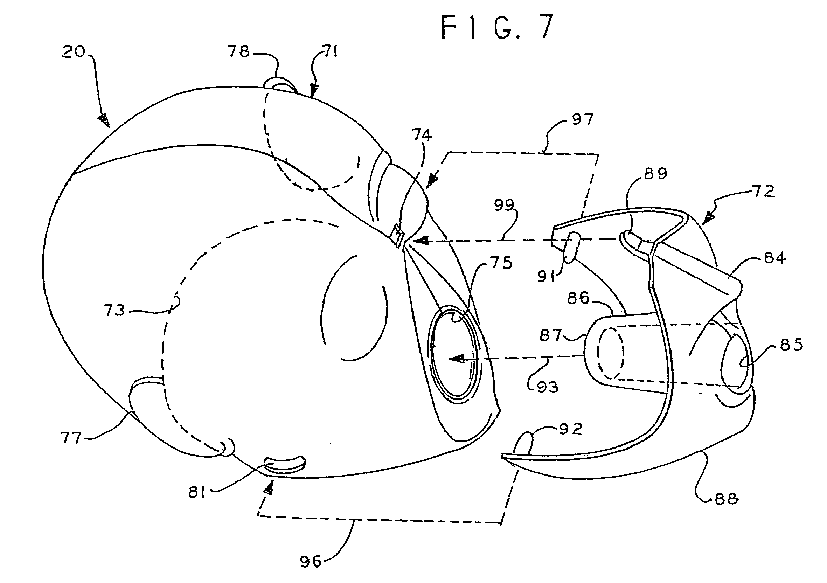

Referring to FIG. 7 and to the head 20, it will be understood that the head 20 includes a hollow first head portion indicated by general numerical designation 71 and a second head portion indicated by general numerical designation 72; the first head portion 71 may be referred to generally as a head member, and the second head portion 72 may be referred to generally as a mouthpiece. The first head portion 71 and the second head portion 72 may be made from a suitable light weight flexible material, such as polypropylene and may be made by a suitable manufacturing techniques, such as injection molding. The first head portion 71 is generally spherical having an open bottom 73 shown in dashed outline in FIG. 7, also note FIG. 2 where the head bottom opening 73 is shown in solid outline, and is provided with a generally rectangular mounting slot 74 in the nose region and a generally circular mouth opening 75. In addition, the head portion 71 is provided with outwardly extending protrusions 77 and 78 simulating the human ears and a pair of generally opposed semi-circular or arcuate mounting slots 81 and 82. Only one arcuate mounting slot 81 is shown in FIG. 7, but it will be understood that a corresponding mounting slot 82 is provided on the opposite side of the head portion 71.

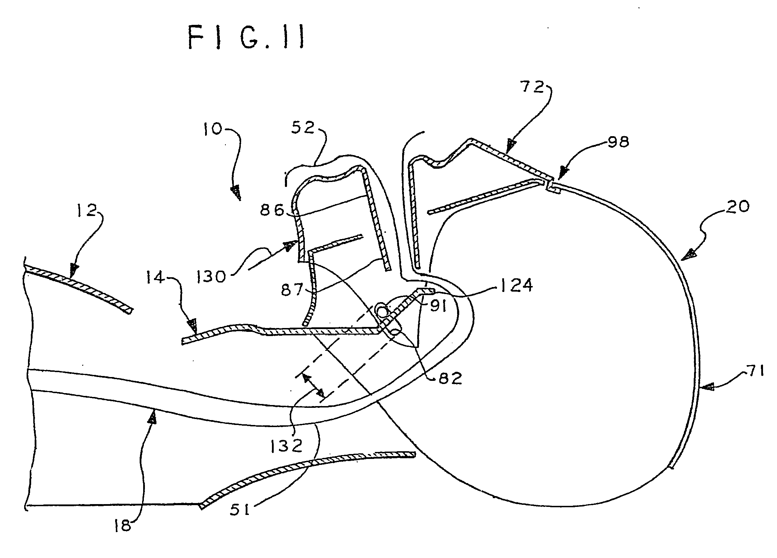

The second head portion, or mouthpiece, 72 may be considered to be a combination nose, mouth and jaw piece member and includes an outwardly extending protrusion simulating the human nose 84, circular opening simulating the human mouth 85 and from which a generally cylindrical hollow or tubular member 86 extends inwardly, a jaw or mandible 88 and an irregularly shaped mounting tab 89 extending outwardly and upwardly from the nose portion 84; the tubular member 86 includes a flat annular surface 87. As shown in FIG. 7, a pair of generally opposed and inwardly extending mouthpiece mounting pins 91 and 92 extend inwardly from the respective right and left jaw portions of the mandible or jaw 88. The head portion 72, or mouthpiece is mounted to the head portion 71, or head member, by being moved or lightly forced into engagement with the head portion 71, as indicated by the dashed arrow 93 in FIG. 7, to insert the irregularly shaped mounting tab 89 provided on the mouthpiece 72 into the rectangular slot 74 provided on the head member 71 and to insert the tubular member 86 through the mouth opening 75 and into the hollow interior of the first head portion 71 and to expand the left and right portions of the jaw or mandible 88 and to cause the mounting pins 91 and 92 provided on the head portion 72 to be received or inserted in the arcuate mounting slots 81 and 82 provided in the head portion 71 as indicated by the dashed line arrows 96 and 97 in FIG. 7. The insertion of the mounting tab 89 provided in the head portion or mouthpiece member 72 into the mounting slot 74 provided on the head portion 71, as indicated by the dashed line arrow 99 in FIG. 7, provides a pivot point, indicated diagrammatically in FIG. 11 by numerical designation 98, about which the second head portion 72 pivots with respect to the head portion 71 for sliding arcuate movement with respect thereto, as will be explained in detail below to perform jaw thrusts in practicing CPR.

Referring to FIG. 7, it will be understood that the portion of the second head portion 72 comprising the protrusion and nose 84 may be sufficiently thin-walled that the nose may be squeezed for the pinching of the nostrils in the practice of CPR. Also, it will be understood that upon the second head portion 72 being mounted to the first head portion 71 and the tubular member 87 being inserted into the mouth opening 75, the mouths, or mouth openings, 75 and 85 will be generally aligned.

Referring again to FIG. 7 and to FIG. 8, it will be understood that, note FIG. 8, the shape of the mouth opening 85 and tubular member 86 facilitates the insertion of typically used barrier devices, sometimes referred to as face shields, which protect the mouth 85 and the area surrounding the mouth prior to use in CPR training.

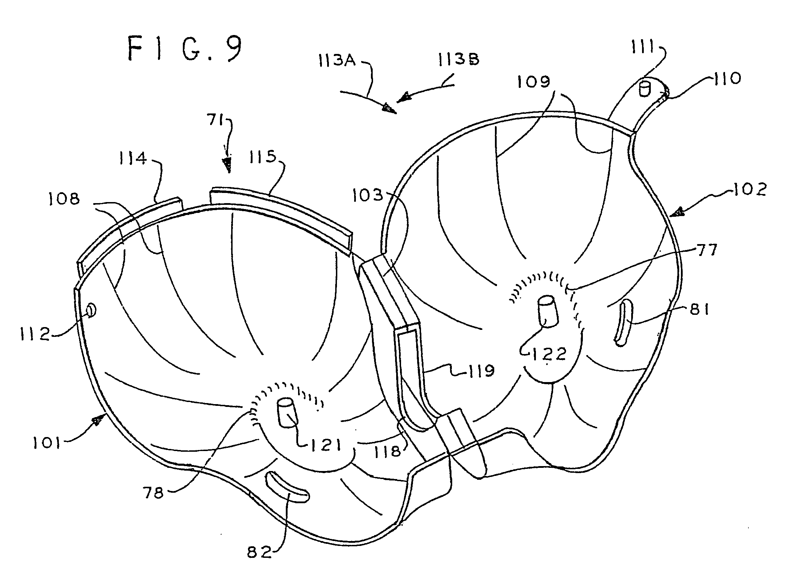

The structure of the first head portion or head member 71 will be understood by reference to FIG. 9. It will be understood that the first head portion or head member 71 is molded, as noted above, in one piece from a suitable light weight and flexible plastic such as, for example, polypropylene, and by a suitable manufacturing process such as injection molding, whereby the head members 101 and 102 are integrally interconnected by a thin portion which is known to the art as a living hinge which, as will be understood from FIG. 1, is situated generally along the head center line 105 residing along the nose 84 and chin 107. The head members 101 and 102, FIG. 9, as will be understood by the respective pluralities of radial lines 108 and 109, are generally outwardly curved head members. Head member 102 is provided with a snap closure member including an outwardly extending tab 110 provided with an inwardly extending connecting pin 111 and the head member 101 is provided with a snap closure connecting hole 112 extending therethrough. The living hinge 103 permits the head members 101 and 102 to be pivoted towards each other about the living hinge, and upon the head members being pivoted together as indicated by the curved arrows 113A and 113B (FIG. 9), the connecting pin 111 is inserted into the connecting hole 112 to cause the head members 101 and 102 to be secured together and to cooperatively form a hollow generally spherical member comprising the first head portion or first head member 71; the snap closure between the connecting pin 111 and connecting hole 112 prevents the head members 101 and 102 from separating during CPR practice. The head member 101, FIG. 9, may be provided with a pair of integrally formed and outwardly extending projections or flanges 114 and 115 which, upon the head members 101 and 102 being secured together, will overlie portions of the head member 102 to further facilitate the closure of the head members upon each other with the flanges 114 and 115 residing over adjacent portions of the head member 102.

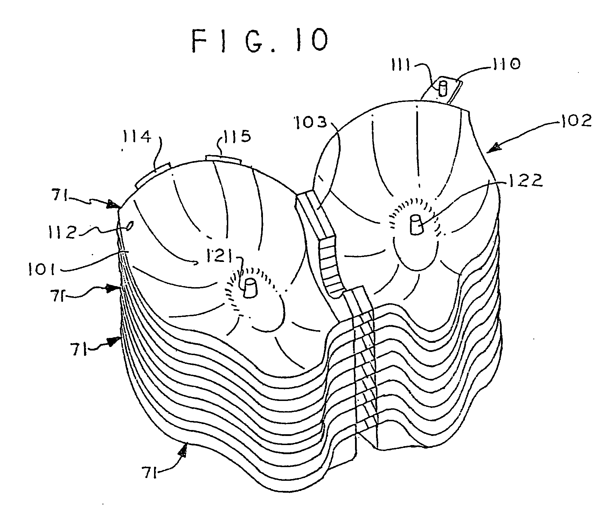

Referring further to FIG. 9, the head members 101 and 102 are provided, respectively, with inwardly extending generally half circle openings 118 and 119 which, upon the head members 101 and 102 being connected or secured together, cooperatively provide the mouth opening 75 shown in FIG. 7. After the practice of CPR, the second head portion or mouth member 72, FIG. 7, may be removed or dismounted from the first head member portion 71 by reversing the mounting procedure described above and, FIG. 9, namely, the snap closure between the head member portions 101 and 102 may be undone by removing the connecting pin 111 from the connecting hole 112 after which the head members 101 and 102 are folded away from each other, opposite the directions of the arrows 113A and 113B, to occupy the position shown in FIG. 9. This provides easy access to the interior of the first head portion 71 and permits easy cleaning of such interior. Referring to FIG. 10, upon the head members 101 and 102 of the first head portion being pivoted away from each other about the living hinge 103, the first head portion becomes substantially flat or planar, and a plurality of first head portions 71 may be stacked together vertically for efficient storage and transportation to a CPR training site. Alternative to the living hinge 103, FIG. 10, the head members 101 and 102 may be molded in two parts and provided with suitable mechanical closures or snap-fitting to mount the head members together for pivotal movement with respect to each other.

The head 20, FIGS. 1 and 2, is mounted pivotally on the neck means 14 to perform the head tilt in the practice of CPR. More particularly, the pivotal interconnection between the first head portion or head member 71, note FIG. 9, and the neck 14, note FIG. 2, is provided by a pair of inwardly extending head mounting pins 121 and 122 (FIG. 9) extending inwardly generally from the ear protrusions 77 and 78, and a clevis portion indicated by general numerical designation 124 (FIG. 2) which clevis portion 124 is provided with a pair of spaced apart and opposed head mounting holes 126 and 127. The head mounting pins 121 and 122 (FIG. 9) are for being inserted into the head mounting holes 126 and 127 as indicated in FIG. 2 by the dashed line arrows 131 and 132.

Referring now to FIG. 11, and unlike as shown in FIG. 11, in the normal position, the second head portion 72 is pivoted toward the first head portion 71 with the flat circular end 87 of the tubular member 86 compressing the intermediate portion 51 of the lung 18 against the clevis portion 124 of the neck 14 to close the lung and prevent air, such as blown from the mouth of a teacher or student during ventilation in the practice of CPR, from entering the lung 18. To practice jaw thrusts, or the jaw thrust maneuver used in the practice of CPR, a generally upward force, indicated by the arrow 130 in FIG. 11, is applied manually to the second head portion 72, by the CPR teacher or student, to pivot the second head portion 72 about the above-described pivot point 98 and to cause the second head portion 72 to pivot slidably and arcuately with respect to the first head portion 71 which movement is allowed or permitted by the sliding arcuate movement of the connecting pins 91 and 92 (FIG. 7) in the respective arcuate slots 81 and 82 (FIG. 9), only connecting pin 91 and arcuate slot 82 being shown in FIG. 11. Such arcuate sliding pivotal movement of the second head portion 72 with respect to the first head portion 71 is limited by the arcuate length of the arcuate slots, e.g. arcuate slot 82, which arcuate length is indicated diagrammatically in FIG. 11 by the double headed arrow 132. Simultaneously, or contemporaneously, the head 20, in the practice of CPR, is rotated about the neck 14 (FIG. 12) in the manner described above to perform head tilt. This sliding arcuate pivoting movement of the second head portion 72 with respect to the first head portion 71 moves the flat annular end 87 of the tubular member 86 away from the clevis portion 124 of the neck 14 thereby opening the intermediate portion 51 of the lung to permit ventilation of the manikin 10 in the practice of CPR. More particularly, such opening of the intermediate portion 51 of the lungs 18 permits the teacher or student to now blow air from his/her lungs into the lung mouthpiece 52 which air will flow through the intermediate portion of the lung 18 and into the lungs air compartment portion 59 (FIG. 2). Flow of the air into the lungs 18 is illustrated diagrammatically in FIG. 12 by the plurality of arrows 134. The normal position of the chest plate 16 is shown in dashed outline in FIG. 12, but upon the lungs 18 being ventilated, as described above by air being blown into the lungs 18 from the lungs of a CPR teacher or student, the air compartment portion 59 (also note FIG. 2) is inflated causing the chest plate 16 to pivot with respect to the torso 12 about the snap fit connection indicated diagrammatically in FIG. 12 by arrow 135, provided by the snap fit members 61 and 62 shown in FIG. 2 and described above, to cause the chest plate 16 to rise off of the torso chest portion 22 (FIG. 2) as indicated by the curved arrow 136 in FIG. 12. It will be further understood that the snap fit connection 135 causes the chest plate 16 to rise from the torso chest portion with sufficient resistance to provide realistic feedback to the student or teacher using the manikin 10 to practice CPR.

It will be further understood that the snap fit connection 135 and the flexible brilliant material of which the chest plate 16 is made, e.g. the above-noted polypropylene, causes the chest plate 16 to flex back into engagement with the torso chest portion 22 upon the cessation of air into the lungs 18 and the deflation of the lungs; this provides further realistic feedback to the teacher or patient practicing CPR on the manikin 10.

It will be understood that since both the torso 12 and chest plate 16 are made of flexible and resilient plastic, such as the above-noted polypropylene, the chest plate and torso 12 compress in concert during the performance of chest compressions in the practice of CPR thereby providing realistic chest compliance.

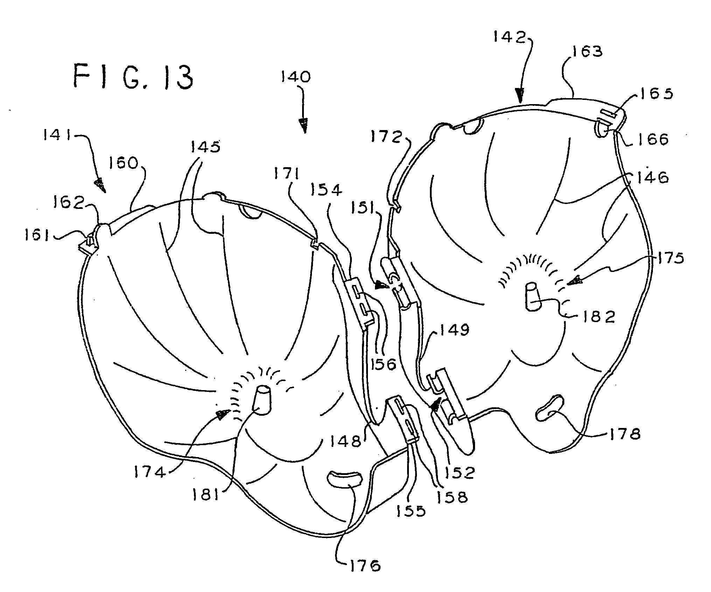

An alternate embodiment of the first head portion or head member is shown in FIG. 13 and indicated by general numerical reference designation 140; first head member 140 is an alternate embodiment to the first head member shown in FIGS. 7 and 9 and described above. As shown in FIG. 13, the first head portion or head member 140 includes a pair of individual or physically separate generally outwardly curved head members indicated respectively by general numerical designations 141 and 142. Outwardly curved head members 141 and 142 each may be molded separately in one piece from a suitable light weight and flexible plastic such as, for example, polypropylene, and by a suitable manufacturing process such as injection molding. The head members 141 and 142, as noted generally above, are generally outwardly curved head members as will be understood more particularly by the respective pluralities of radial lines 145 and 146 shown in FIG. 13, which lines 145 and 146 are similar to the lines 108 and 109 shown in FIG. 9. It will be generally understood that the two outwardly curved head members 141 and 142 of FIG. 13 upon being hinged together, and snap-fitted together, as described in detail below, form a hollow generally spherical member comprising an alternate embodiment to the first head portion or head member 71 shown in FIG. 7, and it will be further understood that the second head member 72 shown in FIG. 7 is for being mounted to the alternate embodiment head portion 140 for sliding arcuate movement with respect thereto as explained in detail above with regard to the head member 71 to perform jaw thrusts in practicing CPR.

Referring again to FIG. 13, the outwardly curved head members 141 and 142 are provided, respectively, with inwardly extending generally half circle openings 148 and 149 which, upon the head members 141 and 142 being hinged and snap-fitted together as described in detail below, form a mouth opening such as mouth opening 75 shown in FIG. 7.

Head member142, FIG. 13, is provided with first and second pairs of curved and outwardly extending hinge members indicated by general numerical designations 151 and 152, and the head member 141 is provided with outwardly extending hinge members 154 and 155 provided with respective pairs of openings 156 and 158 for receiving, respectively, the pairs of curved and outwardly extending hinge members 151 and 152 provided on the head member 142. Upon the curved and outwardly extending hinge members 151 and 152 being received within the openings 156 and 158, such hinge members and openings cooperatively provide a hinge about which the outwardly curved head members 141 and 142 pivot together to form the above-noted hollow generally spherical head member comprising an alternate embodiment to the first head member 71 shown in FIG. 7. It will be noted from FIG. 13 that alternate adjacent ones of the pairs of curved and outwardly extending hinge members 151 and 152 provided on the head member 142 are curved in opposite directions and it has been found that such opposite curvature provides an improved hinge with enhanced pivoting action.

Head member 141 includes a tab 160, FIG. 13, provided with a plurality of outwardly extending snap-fit members 161 and 162 and head member 142 is provided with a tab 163 provided with a pair of snap openings 165 and 166 for respectively receiving the snap fit members 161 and 162 in a slight interference fit to snap-fit the head members 141 and 142 together after being pivoted into engagement with each other about the cooperative hinge means as described above.

As will be further understood from FIG. 13, the outwardly curved head members 141 and 142 are provided, respectively, with inwardly extending generally rectangular slots 171 and 172 which cooperatively provide a generally rectangular opening upon the outwardly curved head members 141 and 142 being pivoted and snap-fitted together as described above. The rectangular opening provided cooperatively by the slots 171 and 172 is for receiving the irregularly shaped mounting tab 89, FIG. 7, provided on the second head portion 72 for the same purpose described above with regard to the mounting of the second head portion 72 to the first head portion 71 and as illustrated diagrammatically in FIG. 7.

Referring further to FIG. 13 and to the alternate embodiment first head portion or head member 140, the outwardly curved head members 141 and 142 are provided respectively, on their reverse sides, with outwardly extending protrusions 174 and 175, indicated respectively by general numerical designations 174 and 175, simulating the human ears and with a pair of arcuate mounting slots 176 and 178. The outwardly extending protrusions 174 and 175 are indicated in FIG. 13 by the pluralities of curved lines as shown and simulate the human ears in the same manner as the protrusions 78 and 77 as shown in FIG. 9. As is further shown in FIG. 13, a pair of inwardly extending head mounting pins 181 and 182 extend inwardly generally from the ear protrusions 174 and 175. It will be further understood that upon the outwardly curved head members 141 and 142 being pivoted and snap-fitted together to provide the alternate embodiment first head portion or head member 140, the second head member or head portion 72 shown in FIG. 7 is mounted to the alternate embodiment head member 140 in the same manner that the second head member 72 is mounted to the first head member 71 as illustrated diagrammatically in FIG. 7 and for the same purpose of providing CPR jaw thrust movement. Lastly, it will be understood that the alternate embodiment first head portion or head member 140 (FIG. 13) is mounted pivotally to the clevis portion 124 of the neck 14 (FIG. 2) by the mounting pins 181 and 182 (FIG. 13) which are received within the mounting holes 126 and 127 provided in the neck clevis portion 124 (FIG. 2). This pivotal head mounting permits the practice of the above-noted CPR head tilt movement.

The present invention is defined in the independent claims.

## Claims

1. Apparatus for simulating the human head, comprising:
head means (20) including first head means (71) and second head means (72), said first head means (71) being substantially hollow, having an open bottom (73) and a first mouth opening (75), said second head means (72) including a jaw (88), said second head means (72) for being mounted pivotally to said first head means (71) and for sliding arcuate movement with respect thereto, **characterized in that** said second head means has a second mouth opening (85), and that said second mouth opening (85) includes an inwardly extending hollow cylindrical tube (86) for being inserted through said first mouth opening (75) and into said first head means (71) to substantially align said first mouth opening (75) and said second mouth opening (85).

2. The apparatus according to claim 1 wherein said second head means (72) includes a nose portion (84), a mouth portion providing said second mouth opening (85), and a jaw portion (88), said nose portion (84) being a thin-walled nose portion.

3. An apparatus for practicing cardiopulmonary resuscitation (CPR) comprising torso means (12), breast plate means (16), lung means (18) and the apparatus for simulating the human head according to claim 1, said breast plate means (16) mounted pivotally to said torso means (12), said lung means (18) residing intermediate said torso means (12) and said breast plate means (16) and mounted to said torso means (12) and extending into said hollow head means (20) and out said first mouth opening (75), wherein the sliding arcuate movement of the second head means (72) with respect to the first head means (71) enables the performance of jaw thrusts in the practice of CPR.

4. Apparatus according to claim 3 wherein the torso means (12) includes neck means (14), wherein said lung means (18) are elongated and include a closed end portion (50) separated into a lung mounting portion (58) and an air compartment portion (59) and an open end portion (52) for admitting air into said lung means (18) to inflate said air compartment portion (59), said lung mounting portion (58) mounted to said torso means (12), and said breast plate means (16) mounted pivotally to said torso means (12) through said lung mounting portion (58) and for pivotal movement with respect to said torso means (12) in response to inflation of said air compartment portion (59) to indicate chest rise in the practice of cardiopulmonary resuscitation (CPR) said open end portion (52) of said lung means (18) extending into said hollow head means (20) and out said first mouth opening (75); and
said head means (20) mounted pivotally to said neck means (14) to perform head tilt in the practice of CPR.

5. The apparatus according to claim 4 wherein said lung means (18) includes an intermediate portion (51) intermediate said closed end portion (50) and said open end portion (52), wherein said neck means (14) provides an inverted U-shaped channel, wherein said torso means (12) are hollow and are provided with a lung opening (54) adjacent said neck means (14), and wherein said intermediate portion (51) of said lung means (18) extends inwardly of said torso means (12) through said lung opening (54) and through said inverted U-shaped channel and through said open blottom (73) of said first head means (71) and into said hollow first head means (71).

6. The apparatus according to claim 5 wherein said torso means (12) are hollow, include a chest portion (22) adjacent said neck means (14) and an abdominal portion (23) opposite said neck means (14) and wherein said abdominal portion (23) is provided with an abdominal opening (32) to enhance compression and flexing of said abdominal portion (23) to perform abdominal thrusts in the practice of CPR, wherein said chest portion (22) is provided with pluralities of openings (25, 26, 27, 28) defining solid portions therebetween simulating human ribs (30) and wherein said lung opening (54) is provided in said chest portion (22) proximal said neck means (14).

7. An apparatus for practicing cardiopulmonary resuscitation (CPR) comprising:
torso means (12);
neck means (14) mounted to said torso means (12);
breast plate means (16);
an apparatus for simulating the human head according to claim 1, wherein said sliding arcuate movement of said second head means (72) with respect to said first head means (71) enables the teaching of jaw thrusts in practicing CPR;
lung means (18) including a closed end portion (50), an open end portion (54), and an intermediate portion (51), said closed end portion (50) for residing between said torso means (12) and said breast plate means (16), said intermediate portion (51) for extending along said neck means (14) and through said open bottom of said first head means (71) and through said cylindrical tube (86) and said closed end portion (50) for extending outwardly of and residing outwardly of said second mouth opening (85); and
said torso means (12), said breast plate means (16) and said lung means (18) provided with cooperative first mounting means (61) for mounting said breast plate means (16) and said lung means (18) to said torso means (12) and for mounting said breast plate means (16) pivotally with respect to said torso means (12); and
second mounting means (121, 122, 126, 127) for mounting said head means (20) pivotally to said neck means (14).

8. The apparatus according to claim 7 wherein said torso means (12) are substantially a single half shell with tapered sides having a completely open bottom and being made of flexible material and being provided with pluralities of generally opposed openings (25, 26, 27, 28) simulating ribs (29, 30) therebetween, and provided with a neck opening proximal said neck means (14) through which said intermediate portion (51) of said lung means (18) extends.

9. The apparatus according to claim 8 wherein said half shell includes a chest portion (22) proximal said neck means (14) and being provided with said opposed openings, and said chest portion (22) including an abdominal portion (23) provided with an abdominal opening (32) generally opposite said neck opening, said abdominal opening (32) facilitating compression and flexing of said abdominal portion (23) to perform abdominal thrusts in practicing CPR.

10. The apparatus according to claim 7 wherein said torso means (12) generally comprise a generally semi-spherical hollow dome having a completely open bottom and including a chest portion (22) provided with a neck opening proximal said neck means (14) and an abdominal portion (23) provided with an abdominal opening (32) generally opposite said neck opening, said neck opening permitting said intermediate portion (51) of said lung means (18) to extend therethrough and said abdominal opening (32) facilitating compression and flexing of said abdominal portion (23) to perform abdominal thrusts in practicing CPR.

11. The apparatus according to claim 7 wherein said breast plate means (16) are generally complementary in shape to said torso means (12).

12. The apparatus according to claim 8 wherein said first mounting means (61) includes snap fit means extending outwardly from said breast plate means (16), a first mounting hole (56) provided in said closed end portion of said lung means (18) and a second mounting hole (69) provided in said half shell.

13. The apparatus according to claim 12 wherein said snap fit means comprise a pair of spaced apart, opposed, flexible snap fit members (61, 62) at least one of which includes an angularly extending camming portion (64, 65), upon said snap fit members (61, 62) being extended through said first mounting hole (56) and extended through said second mounting hole (69) said camming member (64, 65) forcing said snap fit means (61, 62) together and upon said camming member (64, 65) extending through said second mounting hole (69) said camming member (64, 65) extending outwardly to snap fit said breast plate means (16) and said closed end portion (50) of said lung means (18) to said chest portion (22) of said half shell and to mount said breast plate means (16) pivotally to said half shell.

14. The apparatus according to claim 10 wherein said neck opening permits said intermediate portion (51) of said lung means (18) to extend therethrough and to reside under said neck means (14).

15. The apparatus according to claim 7 wherein said breast plate means (16) is provided with an outwardly extending protrusion (42) simulating the human collar bone.

16. The apparatus according to claim 7 wherein said neck means (14) are provided with an upwardly extending protrusion (33) simulating the human Adam's apple.

17. The apparatus according to claim 9 wherein said chest portion (22) of said half shell is provided with a generally upwardly and outwardly extending trapezoidal shaped protrusion (36) simulating the xiphoid process of the human sternum.

18. The apparatus according to claim 7 wherein said neck means (14) extend generally longitudinally and include opposed side portions provided with inwardly extending grooves (35) simulating the human carotid arteries.

19. The apparatus according to claim 10 wherein said intermediate portion (51) of said lung means (18) extend through said neck opening and wherein said neck means (14) extend generally longitudinally and are generally inverted U- shaped in transverse cross-section to provide an open channel through which at least a portion of said intermediate portion (51) of said lung means (18) extends so as to reside generally under said neck means (14).

20. The apparatus according to claim 7 wherein said first head means (71) are hollow and generally spherical and are provided with a pair of generally opposed outwardly extending ear portions (77, 78) and a pair of generally opposed inwardly extending head mounting pins (121, 122) extending generally inwardly from said opposed ear portions (77, 78), wherein said neck means (14) includes an outer end portion provided with a clevis portion (124) providing a pair of generally opposed head mounting holes (126, 127) and wherein said head mounting pins (121, 122) are for being received within said head mounting holes (126, 127) to mount said first head means (71) pivotally with respect to said neck means (14) to permit said head means (71) to be rotated with respect to said neck means (14) to simulate head tilt in the practice of CPR, said second mounting means comprising said head mounting pins (121, 122) and said head mounting holes (126, 127).

21. The apparatus according to claim 1 or 7 wherein said first head means (71) are provided with a tab mounting opening (74) and a pair of spaced apart and generally opposed arcuate slots (81, 82) and wherein said second head means (72) are provided with an outwardly extending and irregularly shaped mounting tab (89) for being received within said tab mounting opening (74) to provide a pivot point and a pair of generally opposed and inwardly extending mounting pins (91, 92) for being received slidably within said arcuate slots (81, 82) to permit said second head means (72) to pivot about said pivot point and with respect to said first head means (71) and to permit said mounting pins (91, 92) to slide arcuately in said arcuate slots (81, 82) to provide said sliding arcuate movement of said second head means (72) with respect to said first head means (71).

22. The apparatus according to claim 7 wherein said second head means (72) includes a nose portion (84), a mouth portion providing said second mouth opening (85), and a jaw portion (88), said nose portion (84) being a thin-walled portion permitting the nose portion (84) to be squeezed to practice closing of the nostrils in the practice of CPR.

23. The apparatus according to claim 21 wherein said first head means (71) are formed from a generally clam shell configuration including a pair of outwardly curved head members (101, 102) interconnected by an integrally formed hinge (103), each of said curved members (101, 102) provided with an inwardly extending generally half a circle opening (118, 119), one of said head members (101, 102) provided with an outwardly extending tab (110) provided with an inwardly extending connecting pin (111) and the other of said head members (101, 102) provided with a connecting hole (112) extending therethrough and upon said head members (101, 102) being pivoted toward each other about said hinge (103) and said connecting pin (111) being inserted through said connecting hole (112), said head members (101, 102) closing together and forming a hollow generally spherical member comprising said first head means (71) and said half circle openings (118, 119) meeting to form said first mouth opening (75), upon said connecting pin (111) being removed from said connecting hole (112) and said head members (101, 102) pivoted away from each other about said hinge (103) said pair of head members (101, 102) being generally flat to permit a plurality of said first head means (71) to be stacked vertically.

24. The apparatus according to claim 21 wherein said first head means (71) comprise a pair of individual outwardly curved head members (141, 142), each of said curved head members (141, 142) provided with an inwardly extending generally half circle opening (148, 149), said curved head members (141, 142) provided with cooperative hinge means (151, 152, 154, 155) about which said curved head members (141, 142) pivot to form a hollow generally spherical member comprising said first head means (71), and to cause said half circle openings (148, 149) to meet and form said first mouth opening (75), said curved head members (141, 142) further provided with cooperative snap fit means (161, 162) for snap fitting said curved head members (141, 142) together, upon said cooperative snap fit means (161, 162) being unsnapped and upon said curved head members (141, 142) being pivoted away from each other about said cooperative hinge means (151, 152, 154, 155), said pair of curved head members (141, 142) being generally flat to permit a plurality of said first head means (71) to be stacked vertically.

25. The apparatus according to claim 24 wherein said cooperative hinge means (151, 152, 154, 155) comprise a plurality of curved and outwardly extending first hinge members (151, 152) provided on one of said curved head members (141, 142) and a plurality of outwardly extending second hinge members (154, 155) provided on the other of said curved head members (141, 142), said second hinge members (154, 155) provided with openings (156, 158) for receiving said first hinge members (151, 152).

26. The apparatus according to claim 25 wherein alternate adjacent ones of said first hinge members (151, 152) are curved in opposite directions.

27. The apparatus according to claim 24 wherein said cooperative hinge means (151, 152, 154, 155) comprise first cooperative hinge means (151, 154) and second cooperative hinge means (152, 155), wherein said first cooperative hinge means (151, 154) are disposed on one side of said first mouth opening and said second cooperative hinge means (152, 155) are disposed on the other side of said first mouth opening (75).

28. The apparatus according to claim 24 wherein said cooperative snap-fit means (161, 162) comprise a plurality of outwardly extending snap-fit members (161, 162) provided on one of said head members (141, 142) and a plurality of snap-fit openings (165) provided on the other of said head members (141, 142) for receiving said plurality of outwardly extending snap fit members (161, 162).

29. The apparatus according to claim 7 wherein said apparatus are also for practicing automatic external defibrillation (AED), and wherein said apparatus further comprises a plurality of AED electrodes, and wherein at least said chest plate means are provided with anatomical landmarks to facilitate the proper placement of said AED electrodes on said apparatus and wherein said anatomical landmarks comprise a protrusion provided on said chest plate means simulating the human collar bone, an indentation provided on said breast plate means simulating the human sternum, and a pair of outwardly extending protrusions provided on said breast plate means simulating the human nipples, and wherein said AED electrodes are provided with an adhesive to adhere said electrodes to said breast plate means and said torso means.

## Patentansprüche

1. Vorrichtung zum Simulieren des menschlichen Kopfes, die umfasst:
eine Kopf-Einrichtung (20), die eine erste Kopf-Einrichtung (71) und eine zweite Kopf-Einrichtung (72) enthält, wobei die erste Kopf-Einrichtung (71) im Wesentlichen hohl ist und ein offenes unteres Ende (73) sowie eine erste Mundöffnung (75) aufweist, die zweite Kopf-Einrichtung (72) einen Kiefer (88) enthält, die zweite Kopf-Einrichtung (72) zum schwenkbaren Anbringen an der ersten Kopf-Einrichtung (71) und für gleitende bogenförmige Bewegung in Bezug auf diese eingerichtet ist, **dadurch gekennzeichnet, dass** die zweite Kopf-Einrichtung eine zweite Mundöffnung (85) aufweist und dass die zweite Mundöffnung (85) eine sich nach innen erstreckende hohle zylindrische Röhre (86) enthält, die durch die erste Mundöffnung (75) hindurch in die erste Kopf-Einrichtung (71) eingeführt wird, um die erste Mundöffnung (75) und die zweite Mundöffnung (85) im Wesentlichen auszurichten.

2. Vorrichtung nach Anspruch 1, wobei die zweite Kopf-Einrichtung (72) einen Nasenabschnitt (84), einen Mundabschnitt, der die zweite Mundöffnung (85) aufweist, und einen Kieferabschnitt (88) enthält, wobei der Nasenabschnitt (84) ein dünnwandiger Nasenabschnitt ist.

3. Vorrichtung zum Üben kardiopulmonaler Reanimation, die eine Torso-Einrichtung (12), eine Brustplatten-Einrichtung (16), eine Lungen-Einrichtung (18) und die Vorrichtung zum Simulieren des menschlichen Kopfes nach Anspruch 1 umfasst, wobei die Brustplatten-Einrichtung (16) schwenkbar an der Torso-Einrichtung (12) angebracht ist, sich die Lungen-Einrichtung (18) zwischen der Torso-Einrichtung (12) und der Brustplatten-Einrichtung (16) befindet und an der Torso-Einrichtung (12) angebracht ist und sich in die hohle Kopf-Einrichtung (20) hinein und aus der ersten Mundöffnung (75) heraus erstreckt, und wobei die gleitende bogenförmige Bewegung der zweiten Kopf-Einrichtung (72) in Bezug auf die erste Kopf-Einrichtung (71) das Durchführen von Esmarch-Handgriffen beim Üben kardiopulmonaler Reanimation ermöglicht.

4. Vorrichtung nach Anspruch 3, wobei die Torso-Einrichtung (12) eine Hals-Einrichtung (14) enthält, die Lungen-Einrichtung (18) länglich ist und einen geschlossenen Endabschnitt (50), der in einen Lungen-Anbringungsabschnitt (58) und einen Luftkammerabschnitt (59) unterteilt ist, sowie einen offenen Endabschnitt (52) enthält, mit dem Luft in die Lungen-Einrichtung (18) eingelassen wird, um den Luftkammerabschnitt (59) aufzublasen, der Lungen-Anbringungsabschnitt (58) an der Torso-Einrichtung (12) angebracht ist und die Brustplatten-Einrichtung (16) über den Lungen-Anbringungsabschnitt (58) schwenkbar an der Torso-Einrichtung (12) angebracht ist, um in Reaktion auf Aufblasen des Luftkammerabschnitts (59) Schwenkbewegung in Bezug auf die Torso-Einrichtung (12) auszuführen, und Heben des Brustkorbs beim Üben kardiopulmonaler Reanimation anzuzeigen, sich der offene Endabschnitt (52) der Lungen-Einrichtung (18) in die hohle Kopf-Einrichtung (20) und aus der ersten Mundöffnung (75) heraus erstreckt; und
die Kopf-Einrichtung (20) schwenkbar an der Hals-Einrichtung (14) angebracht ist, um Neigung des Kopfes beim Üben kardiopulmonaler Reanimation durchzuführen.

5. Vorrichtung nach Anspruch 4, wobei die Lungen-Einrichtung (18) einen Zwischenabschnitt (51) zwischen dem geschlossenen Endabschnitt (50) und dem offenen Endabschnitt (52) enthält, die Hals-Einrichtung (14) einen Kanal in Form eines umgekehrten U aufweist, die Torso-Einrichtung (12) hohl ist und mit einer Lungenöffnung (54) an die Hals-Einrichtung (14) angrenzend versehen ist, und sich der Zwischenabschnitt (51) der Lungen-Einrichtung (18) im Inneren der Torso-Einrichtung (12) durch die Lungenöffnung (54) hindurch und durch den umgekehrt U-förmigen Kanal sowie durch das offene untere Ende (73) der ersten Kopf-Einrichtung (71) hindurch in die hohle erste Kopf-Einrichtung (71) hinein erstreckt.

6. Vorrichtung nach Anspruch 5, wobei die Torso-Einrichtung (12) hohl ist und einen Brustkorb-Abschnitt (22), der an die Hals-Einrichtung (14) angrenzt, sowie einen Bauch-Abschnitt (23) enthält, der der Hals-Einrichtung (14) gegenüberliegt, und der Bauch-Abschnitt (23) mit einer Bauchöffnung (32) versehen ist, um Züsammendrücken und Biegen des Bauch-Abschnitts (23) zum Durchführen von Heimlich-Handgriffen beim Üben kardiopulmonaler Reanimation zu verstärken, der Brustkorb-Abschnitt (22) mit zahlreichen Öffnungen (25, 26, 27, 28) versehen ist, zwischen denen feste Abschnitte ausgebildet sind, die menschliche Rippen (30) simulieren, und die Lungenöffnung (54) in dem Brustkorb-Abschnitt (22) nahe an der Hals-Einrichtung (14) vorhanden ist.

7. Vorrichtung zum Üben kardiopulmonaler Reanimation, die umfasst:
eine Torso-Einrichtung (12);
eine Hals-Einrichtung (14), die an der Torso-Einrichtung (12) angebracht ist;
eine Brustplatten-Einrichtung (16);
eine Vorrichtung zum Simulieren des menschlichen Kopfes nach Anspruch 1, wobei die gleitende bogenförmige Bewegung der zweiten Kopf-Einrichtung (72) in Bezug auf die erste Kopf-Einrichtung (71) das Vermitteln von Esmarch-Handgriffen beim Üben kardiopulmonaler Reanimation ermöglicht;
eine Lungen-Einrichtung (18), die einen geschlossenen Endabschnitt (50), einen offenen Endabschnitt (54) und einen Zwischenabschnitt (51) enthält, wobei sich der geschlossene Endabschnitt (50) zwischen der Torso-Einrichtung (12) und der Brustplatten-Einrichtung (16) befindet, sich der Zwischenabschnitt (51) an der Hals-Einrichtung (14) entlang und durch das offene untere Ende der ersten Kopf-Einrichtung (71) und durch die zylindrische Röhre (86) sowie den geschlossenen Endabschnitt (50) hindurch erstreckt und sich von der zweiten Mundöffnung (85) nach außen erstreckt und sich außerhalb derselben befindet; und
die Torso-Einrichtung (12), die Brustplatten-Einrichtung (16) und die Lungen-Einrichtung (18) mit zusammenwirkenden ersten Anbringungseinrichtungen (61) zum Anbringen der Brustplatten-Einrichtung (16) und der Lungen-Einrichtung (18) an der Torso-Einrichtung (12) sowie zum schwenkbaren Anbringen der Brustplatten-Einrichtung (16) in Bezug auf die Torso-Einrichtung (12) versehen sind; und
zweite Anbringungseinrichtungen (121, 122, 126, 127) zum schwenkbaren Anbringen der Kopf-Einrichtung (20) an der Hals-Einrichtung (14).

8. Vorrichtung nach Anspruch 7, wobei die Torso-Einrichtung (12) im Wesentlichen eine einzelne Halbschale mit sich verjüngenden Seiten ist, die eine vollständig offene Unterseite hat und aus flexiblem Material besteht und mit einer Vielzahl im Allgemeinen einander gegenüberliegender Öffnungen (25, 26, 27, 28) versehen ist, zwischen denen Rippen (29, 30) simuliert werden, und mit einer Halsöffnung nahe an der Hals-Einrichtung (14) versehen ist, durch die sich der Zwischenabschnitt (51) der Lungen-Einrichtung (18) hindurch erstreckt.

9. Vorrichtung nach Anspruch 8, wobei die Halbschale einen Brustkorb-Abschnitt (22) nahe an der Hals-Einrichtung (14) enthält und mit den einander gegenüberliegenden Öffnungen versehen ist, der Brustkorb-Abschnitt (22) einen Bauch-Abschnitt (23) enthält, der mit einer Bauchöffnung (32) versehen ist, die im Allgemeinen der Halsöffnung gegenüberliegt, und die Bauchöffnung (32) Zusammendrücken und Biegen des Bauch-Abschnitts (23) zum Durchführen von Heimlich-Handgriffen beim Üben kardiopulmonaler Reanimation erleichtert.

10. Vorrichtung nach Anspruch 7, wobei die Torso-Einrichtung (12) im Allgemeinen eine im Allgemeinen halbkugelförmige hohle Wölbung umfasst, die eine vollständig offene Unterseite aufweist und einen Brustkorb-Abschnitt (22), der mit einer Halsöffnung nahe an der Hals-Einrichtung (14) versehen ist, sowie einen Bauch-Abschnitt (23) enthält, der mit einer Bauchöffnung (32) versehen ist, die im Allgemeinen der Halsöffnung gegenüberliegt, die Halsöffnung zulässt, dass sich der Zwischenabschnitt (51) der Lungen-Einrichtung (18) durch sie hindurcherstreckt, und die Bauchöffnung (32) Zusammendrücken und Biegen des Bauch-Abschnitts (32) zum Durchführen von Heimlich-Handgriffen beim Üben kardiopulmonaler Reanimation erleichtert.

11. Vorrichtung nach Anspruch 7, wobei die Brustplatten-Einrichtung (16) im Allgemeinen komplementär zu der Torso-Einrichtung (12) geformt ist.

12. Vorrichtung nach Anspruch 8, wobei die erste Anbringungseinrichtung (61) eine Einrasteinrichtung, die sich von der Brustplatten-Einrichtung (16) nach außen erstreckt, ein erstes Anbringungsloch (56), das in dem geschlossenen Endabschnitt der Lungen-Einrichtung (18) vorhanden ist, und ein zweites Anbringungsloch (69) enthält, das in der Halbschale vorhanden ist.

13. Vorrichtung nach Anspruch 12, wobei die Einrasteinrichtung ein Paar beabstandeter, einander gegenüberliegender flexibler Einrastelemente (61, 62) umfasst, von denen wenigstens eines einen sich schräg erstreckenden Nockenabschnitt (64, 65) enthält, wobei, wenn die Einrastelemente (61, 62) durch das erste Anbringungsloch (56) und das zweite Anbringungsloch (69) hindurch geführt werden, das Nockenelement (64, 65) die Einrasteinrichtungen (61, 62) zusammendrückt, und wenn das Nockenelement (64, 65) durch das zweite Anbringungsloch (69) hindurch geführt wird, sich das Nockenelement (64, 65) nach außen erstreckt und die Brustplatten-Einrichtung (16) sowie der geschlossene Endabschnitt (50) der Lungen-Einrichtung (18) an dem Brustkorb-Abschnitt (22) der Halbschale einrasten und die Brustplatten-Einrichtung (16) schwenkbar an der Halbschale angebracht wird.

14. Vorrichtung nach Anspruch 10, wobei die Halsöffnung zulässt, dass sich der Zwischenabschnitt (51) der Lungen-Einrichtung (18) durch sie hindurcherstreckt und sich unter der Hals-Einrichtung (14) befindet.

15. Vorrichtung nach Anspruch 7, wobei die Brustplatten-Einrichtung (16) mit einem sich nach außen erstreckenden Vorsprung (42) versehen ist, der das menschliche Schlüsselbein simuliert.

16. Vorrichtung nach Anspruch 7, wobei die Hals-Einrichtung (14) mit einem sich nach oben erstreckenden Vorsprung (33) versehen ist, der den menschlichen Adamsapfel simuliert.

17. Vorrichtung nach Anspruch 9, wobei der Brustkorb-Abschnitt (22) der Halbschale mit einem sich im Allgemeinen nach oben und nach außen erstreckenden trapezförmigen Vorsprung (36) versehen ist, der den menschlichen Schwertfortsatz simuliert.

18. Vorrichtung nach Anspruch 7, wobei sich die Hals-Einrichtung (14) im Allgemeinen in Längsrichtung erstreckt und einander gegenüberliegende Seitenabschnitte enthält, die mit sich nach innen erstreckenden Nuten (35) versehen ist, die die menschlichen Halsschlagadern simulieren.

19. Vorrichtung nach Anspruch 10, wobei sich der Zwischenabschnitt (51) der Lungen-Einrichtung (18) durch die Halsöffnung hindurch erstreckt und sich die Hals-Einrichtung (14) im Allgemeinen in Längsrichtung erstreckt und im Allgemeinen im Querschnitt umgekehrt U-förmig ist und einen offenen Kanal bildet, durch den sich wenigstens ein Teil des Zwischenabschnitts (51) der Lungen-Einrichtung (18) so hindurcherstreckt, dass er sich im Allgemeinen unter der Hals-Einrichtung (14) befindet.

20. Vorrichtung nach Anspruch 7, wobei die erste Kopf-Einrichtung (71) hohl und im Allgemeinen sphärisch ist und mit einem Paar im Allgemeinen einander gegenüberliegender, sich nach außen erstreckender Ohren-Abschnitte (77, 78) und einem Paar im Allgemeinen einander gegenüberliegender, sich nach innen erstreckende Kopf-Anbringungzapfen (121, 122) versehen ist, die sich von den einander gegenüberliegenden Ohrabschnitten (77, 78) im Allgemeinen nach innen erstrecken, die Hals-Einrichtung (14) einen äußeren Endabschnitt enthält, der mit einem Gabelabschnitt (124) versehen ist, der ein Paar im Allgemeinen einander gegenüberliegender Kopf-Anbringungslöcher (126, 127) aufweist, die Kopf-Anbringungszapfen (121, 122) zur Aufnahme in den Kopf-Anbringungslöchern (126, 127) eingerichtet sind, um die erste Kopf-Einrichtung (71) schwenkbar in Bezug auf die Hals-Einrichtung (14) anzubringen und zuzulassen, dass die Kopf-Einrichtung (71) in Bezug auf die Hals-Einrichtung (14) gedreht wird, um Neigung des Kopfes beim Üben kardiopulmonaler Reanimation zu simulieren, und die zweiten Anbringungseinrichtungen die Kopf-Anbringungszapfen (121, 122) und die Kopf-Anbringungslöcher (126, 127) umfassen.

21. Vorrichtung nach Anspruch 1 oder 7, wobei die erste Kopf-Einrichtung (71) mit einer Laschen-Anbringungsöffnung (74) und einem Paar beabstandeter, im Allgemeinen einander gegenüberliegender bogenförmiger Schlitze (81, 82) versehen ist und die zweite Kopf-Einrichtung (72) mit einer sich nach außen erstreckenden und unregelmäßig geformten Anbringungslasche (89), die in der Laschen-Anbringungsöffnung (74) aufgenommen wird, um einen Schwenkpunkt zu bilden, sowie einem Paar im Allgemeinen einander gegenüberliegender, sich nach innen erstreckender Anbringungszapfen (91, 92) versehen ist, die gleitend in den bogenförmigen Schlitzen (81, 82) aufgenommen werden, um zuzulassen, dass die zweite Kopf-Einrichtung (72) um den Schwenkpunkt herum und in Bezug auf die erste Kopf-Einrichtung (71) geschwenkt wird, und zuzulassen, dass die Anbringungszapfen (91, 92) bogenförmig in den bogenförmigen Schlitzen (81, 82) gleiten, um die gleitende bogenförmige Bewegung der zweiten Kopf-Einrichtung (72) in Bezug auf die erste Kopf-Einrichtung (71) zu ermöglichen.

22. Vorrichtung nach Anspruch 7, wobei die zweite Kopf-Einrichtung einen Nasenabschnitt (84), einen Mundabschnitt, der die zweite Mundöffnung (85) aufweist, und einen Kieferabschnitt (88) enthält, und der Nasenabschnitt (84) ein dünnwandiger Abschnitt ist, der zulässt, dass der Nasenabschnitt (84) zusammengedrückt wird, um das Schließen der Nasenlöcher beim Üben von kardiopulmonaler Reanimation zu üben.

23. Vorrichtung nach Anspruch 21, wobei die erste Kopf-Einrichtung (71) aus einer im Allgemeinen muschelschalenförmigen Konstruktion besteht, die ein Paar nach außen gekrümmter Kopf-Elemente (101, 102) enthält, die durch ein integral ausgebildetes Scharnier (103) miteinander verbunden sind, jedes der gekrümmten Elemente (101, 102) mit einer sich nach innen erstreckenden, im Allgemeinen halbkreisförmigen Öffnung (118, 119) versehen ist, eines der Kopfelemente (101, 102) mit einer sich nach außen erstreckenden Lasche (110) versehen ist, die mit einem sich nach innen erstreckenden Verbindungszapfen (111) versehen ist, und das andere der Kopf-Elemente (101, 102) mit einem Verbindungsloch (112) versehen ist, das sich durch dieses hindurcherstreckt, und, wenn die Kopf-Elemente (101, 102) um das Scharnier (103) herum aufeinander zu geschwenkt werden und der Verbindungszapfen (111) durch das Verbindungsloch (112) hindurch eingeführt wird, die Kopf-Elemente (101, 102) zusammengeklappt werden und ein hohles, im Allgemeinen sphärisches Element bilden, das die erste Kopf-Einrichtung (71) und die halbkreisförmigen Öffnungen (118, 119) umfasst, die aufeinandertreffen und die erste Mundöffnung (75) bilden, und wobei, wenn der Verbindungszapfen (111) aus dem Verbindungsloch (112) entfernt wird und die Kopf-Elemente (101, 102) um das Scharnier (103) herum voneinander weggeschwenkt werden, die paarigen Kopf-Elemente (101, 102) im Allgemeinen flach sind, so dass eine Vielzahl der ersten Kopf-Einrichtungen (71) vertikal gestapelt werden kann.

24. Vorrichtung nach Anspruch 21, wobei die erste Kopf-Einrichtung (71) ein Paar einzelner, nach außen gekrümmter Kopf-Elemente (141, 142) umfasst, jedes der gekrümmten Kopf-Elemente (141, 142) mit einer sich nach innen erstreckenden, im Allgemeinen halbkreisförmigen Öffnung (148, 149) versehen ist, die gekrümmten Kopf-Elemente (141, 142) mit zusammenwirkenden Scharniereinrichtungen (151, 152, 154, 155) versehen sind, um die die gekrümmten Kopf-Elemente (141, 142) geschwenkt werden, um ein hohles, im Allgemeinen sphärisches Element zu bilden das die erste Kopf-Einrichtung (71) umfasst, und zu bewirken, dass die halbkreisförmigen Öffnungen (148, 149) aufeinandertreffen und die erste Mundöffnung (75) bilden, die gekrümmten Kopf-Elemente (141, 142) des Weiteren mit zusammenwirkenden Einrasteinrichtungen (161, 162) zum einrastenden Zusammensetzen der gekrümmten Kopf-Elemente (141, 142) versehen sind, und wobei, wenn die zusammenwirkenden Einrasteinrichtungen (161, 162) gelöst werden und die gekrümmten Kopf-Elemente (141, 142) um die zusammenwirkenden Scharniereinrichtungen (151, 152, 154, 155) voneinander weggeschwenkt werden, die paarigen gekrümmten Kopf-Elemente (141, 142) im Allgemeinen flach sind und zulassen, dass eine Vielzahl der ersten Kopf-Einrichtungen (71) vertikal gestapelt wird.

25. Vorrichtung nach Anspruch 24, wobei die zusammenwirkenden Scharniereinrichtungen (151, 152, 154, 155) eine Vielzahl gekrümmter und sich nach außen erstreckender Scharnierelemente (151, 152), die an einem der gekrümmten Kopf-Elemente (141, 142) vorhanden sind, sowie eine Vielzahl sich nach außen erstreckender zweiter Scharnierelemente (154, 155) umfassen, die an dem anderen der gekrümmten Kopfelemente (141, 142) vorhanden sind, wobei die zweiten Scharnierelemente (154, 155) mit Öffnungen (156, 158) zum Aufnehmen der ersten Scharnierelemente (151, 152) versehen sind.

26. Vorrichtung nach Anspruch 25, wobei abwechselnde, benachbarte der ersten Scharniereinrichtungen (151, 152) in einander entgegengesetzte Richtungen gekrümmt sind.

27. Vorrichtung nach Anspruch 24, wobei die zusammenwirkenden Scharniereinrichtungen (151, 152, 154, 155) erste zusammenwirkende Scharniereinrichtung (151, 154) und zweite zusammenwirkende Scharniereinrichtungen (152, 155) umfassen, und die ersten zusammenwirkenden Scharniereinrichtungen (151, 154) an einer Seite der ersten Mundöffnung angeordnet sind und die zweiten zusammenwirkenden Scharniereinrichtungen (151, 155) an der anderen Seite der ersten Mundöffnung (75) angeordnet sind.

28. Vorrichtung nach Anspruch 24, wobei die zusammenwirkenden Einrasteinrichtungen (161, 162) eine Vielzahl sich nach außen erstreckender Einrastelemente (161, 162), die an einem der Kopf-Elemente (141, 142) vorhanden sind, sowie eine Vielzahl von Einrastöffnungen (165) umfassen, die an dem anderen der Kopf-Elemente (141, 142) vorhanden sind, um die Vielzahl sich nach außen erstreckender Einrastelemente (161, 162) aufzunehmen.

29. Vorrichtung nach Anspruch 7, wobei die Vorrichtung auch zum Üben automatisierter Defibrillation (AED) dient, und die Vorrichtung des Weiteren eine Vielzahl von AED-Elektroden umfasst, wenigstens die Brustplatten-Einrichtung mit anatomischen Merkpunkten versehen ist, um die ordnungsgemäße Anbringung der AED-Elektroden an der Vorrichtung zu erleichtern, die anatomischen Merkpunkte einen Vorsprung, der an der Brustplatten-Einrichtung vorhanden ist und das menschliche Schlüsselbein simuliert, eine Vertiefung, die an der Brustplatten-Einrichtung vorhanden ist und das menschliche Brustbein simuliert, sowie ein Paar sich nach außen erstreckender Vorsprünge umfassen, die an der Brustplatten-Einrichtung vorhanden sind und die menschlichen Brustwarzen simulieren, und die AED-Elektroden mit einem Klebstoff zum Ankleben der Elektroden an der Brustplatten-Einrichtung und der Torso-Einrichtung versehen sind.

## Revendications

1. Appareil pour simuler la tête humaine, comprenant :
des moyens formant tête (20) comprenant des premiers moyens formant tête (71) et des seconds moyens formant tête (72), les premiers moyens formant tête (71) étant globalement creux, ayant une partie inférieure ouverte (73) et une première ouverture buccale (75), tandis que les seconds moyens formant tête (72) comprennent une mâchoire (88), ces seconds moyens (72) étant destinés à être montés pivotants sur les premiers moyens (71) et à décrire un mouvement coulissant courbe par rapport à ceux-ci, **caractérisé en ce que** les seconds moyens formant tête ont une seconde ouverture buccale (85) et **en ce que** ladite seconde ouverture buccale (85) contient un tube cylindrique creux (86) qui s'étend vers l'intérieur et qui est destiné à être introduit dans la première ouverture buccale (75) et dans les premiers moyens formant tête (71) pour être globalement dans l'alignement de la première ouverture buccale (75) et de la seconde ouverture buccale (85).

2. Appareil selon la revendication 1, dans lequel les seconds moyens formant tête (72) contiennent une partie nasale (84), une partie buccale qui définit la seconde ouverture buccale (85), et une partie de mâchoire (88), ladite partie nasale (84) étant une partie nasale à paroi mince.

3. Appareil pour s'entraîner à la réanimation cardio-pulmonaire (RCP), comprenant des moyens formant torse (12), des moyens formant plastron (16), des moyens formant poumons (18) et l'appareil pour simuler la tête humaine selon la revendication 1, les moyens formant plastron (16) étant montés pivotants sur les moyens formant torse (12), les moyens formant poumons (18) se trouvant entre les moyens formant torse (12) et les moyens formant plastron (16), étant montés sur les moyens formant torse (12), entrant dans les moyens formant tête creux (20) et sortant par la première ouverture buccale (75), étant précisé que le mouvement coulissant courbe des seconds moyens formant tête (72) par rapport aux premiers moyens formant tête (71) permet de procéder à des sub-luxations de la mâchoire lors de l'entraînement à la RCP.

4. Appareil selon la revendication 3, dans lequel les moyens formant torse (12) comprennent des moyens formant cou (14), les moyens formant poumons (18) ont une forme allongée et comprennent une partie d'extrémité fermée (50) divisée en une partie de montage de poumons (58) et une partie de compartiment d'air (59), et une partie d'extrémité ouverte (52) pour l'admission d'air dans les moyens formant poumons (18) afin de gonfler la partie de compartiment d'air (59), la partie de montage de poumons (58) est montée sur les moyens formant torse (12), et les moyens formant plastron (16) sont montés pivotants sur les moyens formant torse (12) grâce à la partie de montage de poumons (58) pour pouvoir pivoter par rapport aux moyens formant torse (12) en réponse au gonflage de la partie de compartiment d'air (59) pour indiquer un soulèvement de la poitrine lors de l'entraînement à la réanimation cardio-pulmonaire (RCP), la partie d'extrémité ouverte (52) des moyens formant poumons (18) entrant dans les moyens formant tête creux (20) et sortant par l'ouverture buccale (75) ; et les moyens formant tête (20) sont montés pivotants sur les moyens formant cou (14) pour réaliser une bascule de la tête lors de l'entraînement à la RCP.

5. Appareil selon la revendication 4, dans lequel les moyens formant poumons (18) comprennent une partie intermédiaire (51) située entre la partie d'extrémité fermée (50) et la partie d'extrémité ouverte (52), les moyens formant cou (14) forment un conduit un U renversé, les moyens formant torse (12) sont creux et sont pourvus d'une ouverture de poumons (54) voisine des moyens formant cou (14), et la partie intermédiaire (51) des moyens formant poumons (18) s'étend vers l'intérieur des moyens formant torse (12) à travers l'ouverture de poumons (54), le conduit en U renversé et la partie inférieure ouverte (73) des premiers moyens formant tête (71) pour entrer dans ceux-ci.

6. Appareil selon la revendication 5, dans lequel les moyens formant torse (12) sont creux et comprennent une partie thoracique (22) proche des moyens formant cou (14), et une partie abdominale (23) opposée à ceux-ci, la partie abdominale (23) est pourvue d'une ouverture abdominale (32) pour favoriser la compression et le fléchissement de la partie abdominale (23) pour réaliser des compressions abdominales lors de l'entraînement à la RCP, la partie thoracique (22) est pourvue de plusieurs ouvertures (25, 26, 27, 28) qui définissent entre elles des parties solides simulant les côtes humaines (30), et l'ouverture de poumons (54) est prévue dans la partie thoracique (22) près des moyens formant cou (14).

7. Appareil pour s'entraîner à la réanimation cardio-pulmonaire (RCP), comprenant :
des moyens formant torse (12) ;
des moyens formant cou (14) montés sur ceux-ci ;
des moyens formant plastron (16) ;
un appareil pour simuler la tête humaine selon la revendication 1, dans lequel le mouvement coulissant courbe des seconds moyens formant tête (72) par rapport aux premiers moyens formant tête (71) permet d'enseigner les sub-luxations de la mâchoire lors de l'entraînement à la RCP ;
des moyens formant poumons (18) comprenant une partie d'extrémité fermée (50), une partie d'extrémité ouverte (54) et une partie intermédiaire (51), la partie d'extrémité fermée (50) étant conçue pour être située entre les moyens formant torse (12) et les moyens formant plastron (16), la partie intermédiaire (51) étant conçue pour s'étendre le long des moyens formant cou (14), à
travers la partie inférieure ouverte des premiers moyens formant tête (71) et le tube cylindrique (86), et la partie d'extrémité fermée (50) étant conçue pour s'étendre vers l'extérieur et pour être située vers l'extérieur de la seconde ouverture buccale (85) ;
les moyens formant torse (12), les moyens formant plastron (16) et les moyens formant poumons (18) étant pourvus de premiers moyens de montage coopératifs pour le montage des moyens formant plastron (16) et des moyens formant poumons (18) sur les moyens formant torse (12) et pour le montage pivotant des moyens formant plastron (16) par rapport aux moyens formant torse (12) ; et
les seconds moyens de montage (121, 122, 126, 127) étant conçus pour le montage pivotant des moyens formant tête (20) sur les moyens formant cou (14).

8. Appareil selon la revendication 7, dans lequel les moyens formant torse (12) consistent globalement en une demi-coque unique avec des côtés effilés, qui présente une partie inférieure complètement ouverte, qui se compose d'un matériau flexible, qui est pourvue de plusieurs ouvertures globalement opposées (25, 26, 27, 28) simulant les côtes (29, 30), entre elles, et qui est pourvue d'une ouverture de cou près des moyens formant cou (14), à travers laquelle s'étend la partie intermédiaire (51) des moyens formant poumons (18).

9. Appareil selon la revendication 8, dans lequel la demi-coque comprend une partie thoracique (22) proche des moyens formant cou (14) et pourvue desdites ouvertures opposées, et la partie thoracique (22) comprend une partie abdominale (23) pourvue d'une ouverture abdominale (32) globalement opposée à l'ouverture de cou, ladite ouverture abdominale (32) facilitant la compression et le fléchissement de la partie abdominale (23) pour réaliser des compressions abdominales lors de l'entraînement à la RCP.

10. Appareil selon la revendication 7, dans lequel les moyens formant torse (12) comprennent généralement un dôme creux globalement hémisphérique qui présente une partie inférieure complètement ouverte et qui comprend une partie thoracique (22) pourvue d'une ouverture de cou proche des moyens formant cou (14) et une partie abdominale (23) pourvue d'une ouverture abdominale (32) globalement opposée à l'ouverture de cou, ladite ouverture de cou permettant à la partie intermédiaire (51) des moyens formant poumons (18) de passer au travers, et l'ouverture abdominale (32) facilitant la compression et le fléchissement de la partie abdominale (23) pour réaliser des compressions abdominales lors de l'entraînement à la RCP.

11. Appareil selon la revendication 7, dans lequel les moyens formant plastron (16) ont globalement une forme complémentaire par rapport au torse (12).

12. Appareil selon la revendication 8, dans lequel les premiers moyens de montage (61) comprennent des moyens d'encliquetage qui s'étendent vers l'extérieur à partir des moyens formant plastron (16), un premier trou de montage (56) prévu dans la partie d'extrémité fermée des moyens formant poumons (18), et un second trou de montage (69) prévu dans la demi-coque.

13. Appareil selon la revendication 12, dans lequel les moyens d'encliquetage comprennent une paire d'éléments d'encliquetage (61, 62) flexibles, opposés et espacés dont l'un au moins comprend une partie saillante (64, 65) prévue suivant un certain angle, étant précisé que lorsque les éléments d'encliquetage (61, 62) passent à travers le premier trou de montage (56) et le second trou de montage (69), l'élément saillant (64, 65) rapproche par force les moyens d'encliquetage (61, 62), et que lorsque ledit élément saillant (64, 65) passe à travers le second trou de montage (69), il s'étend vers l'extérieur pour bloquer par encliquetage les moyens formant plastron (16) et la partie d'extrémité fermée (50) des moyens formant poumons (18) sur la partie thoracique (22) de la demi-coque et pour monter les moyens formant plastron (16) pivotants sur la demi-coque.

14. Appareil selon la revendication 10, dans lequel l'ouverture de cou permet à la partie intermédiaire (51) des moyens formant poumons (18) de passer à travers et d'être situé sous les moyens formant cou (14).

15. Appareil selon la revendication 7, dans lequel les moyens formant plastron (16) sont pourvus d'une saillie (42) qui s'étend vers l'extérieur et qui simule la clavicule humaine.

16. Appareil selon la revendication 7, dans lequel les moyens formant cou (14) sont pourvus d'une saillie (33) qui s'étend vers le haut et qui simule la pomme d'Adam humaine.

17. Appareil selon la revendication 9, dans lequel la partie thoracique (22) de la demi-coque est pourvue d'une saillie trapézoïdale (36) qui s'étend globalement vers le haut et vers l'extérieur et qui simule le processus xiphoïde du sternum humain.

18. Appareil selon la revendication 7, dans lequel les moyens formant cou (14) s'étendent globalement longitudinalement et comprennent des parties latérales opposées pourvues de rainures (35) qui s'étendent vers l'intérieur et qui simulent les artères carotides humaines.

19. Appareil selon la revendication 10, dans lequel la partie intermédiaire (51) des moyens formant poumons (18) passe à travers l'ouverture de cou, et les moyens cou (14) s'étendent globalement longitudinalement et ont une forme globalement en U renversé, en coupe transversale, pour former un conduit ouvert à travers lequel une partie au moins de la partie intermédiaire (51) des moyens formant poumons (18) s'étend de manière à être située globalement sous les moyens formant cou (14).

20. Appareil selon la revendication 7, dans lequel les premiers moyens formant tête (71) sont creux et globalement sphériques et sont pourvus d'une paire de parties d'oreille (77', 78) globalement opposées qui s'étendent vers l'extérieur, et d'une paire de tiges de montage de tête (121, 122) globalement opposées qui s'étendent vers l'intérieur à partir desdites parties d'oreille opposées (77, 78), les moyens formant cou (14) comprennent une partie d'extrémité extérieure pourvue d'une partie de manille (124) qui forme une paire de trous de montage de tête (126, 127) globalement opposés, et les tiges de montage de tête (121, 122) sont destinées à être reçues dans les trous de montage de tête (126, 127) en vue du montage pivotant des premiers moyens formant tête (71) par rapport aux moyens formant cou (14), afin de permettre aux moyens formant tête (71) de tourner par rapport aux moyens formant cou (14) pour simuler la bascule de tête lors de l'entraînement à la RCP, les seconds moyens de montage comprenant les tiges de montage de tête (121, 122) et les trous de montage de tête (126, 127).

21. Appareil selon la revendication 1 ou 7, dans lequel les premiers moyens formant tête (71) sont pourvus d'une ouverture de montage pour languette (74) et d'une paire de fentes courbes (81, 82) espacées et globalement opposées, et les seconds moyens formant tête (72) sont pourvus d'une languette de montage (89) qui s'étend vers l'extérieur, qui a une forme irrégulière et qui est destinée à être reçue par l'ouverture de montage pour languette (74) pour former un point de pivot, et d'une paire de tiges de montage (91, 92) qui sont globalement opposées, qui s'étendent vers l'intérieur et qui sont destinées à être reçues de manière coulissante par les fentes courbes (81, 82) pour permettre aux seconds moyens formant tête (72) de pivoter sur le point de pivot et par rapport aux premiers moyens formant tête (71), et pour permettre aux tiges de montage (91, 92) de coulisser suivant une forme courbe dans les fentes courbes (81, 82) afin de définir un mouvement courbe coulissant des seconds moyens formant tête (72) par rapport aux premiers moyens formant tête (71).

22. Appareil selon la revendication 7, dans lequel les seconds moyens formant tête (72) comprennent une partie nasale (84), une partie buccale qui définit la seconde ouverture buccale (85), et une partie de mâchoire (88), la partie nasale (84) consistant en une partie à paroi mince qui lui permet d'être pincée pour l'entraînement à la fermeture des narines, lors de l'entraînement à la RCP.

23. Appareil selon la revendication 21, dans lequel les premiers moyens formant tête (71) ont globalement la forme d'une coquille bivalve comprenant une paire d'éléments de tête (101, 102) courbés vers l'extérieur qui sont reliés par une articulation formée d'une seule pièce (103), chacun des éléments courbes (101, 102) étant pourvu d'une ouverture (118, 119) globalement semi-circulaire qui s'étend vers l'intérieur, l'un des éléments de tête (101, 102) étant pourvu d'une languette (110) qui s'étend vers l'extérieur et qui présente une tige de liaison (111) s'étendant vers l'intérieur, tandis que l'autre élément de tête (101, 102) est pourvu d'un trou de liaison (112) qui le traverse, moyennant quoi lorsqu'on fait pivoter les éléments de tête (101, 102) l'un vers l'autre sur l'articulation (103) et qu'on introduit la tige de liaison (111) dans le trou de liaison (112), les éléments de tête (101, 102) se ferment et forment un élément creux globalement sphérique qui comprend les premiers moyens formant tête (71), et les ouvertures semi-circulaires (118, 119) se rejoignent pour former la première ouverture buccale (75), tandis que lorsqu'on enlève la tige de liaison (111) du trou de liaison (112) et qu'on fait pivoter les éléments de tête (101, 102) sur l'articulation (103) pour les éloigner l'un de l'autre, lesdits éléments de tête (101, 102) sont globalement plats pour permettre d'empiler verticalement plusieurs moyens formant tête (71).

24. Appareil selon la revendication 21, dans lequel les premiers moyens formant tête (71) comprennent une paire d'éléments de tête individuels (141, 142) courbés vers l'extérieur, chacun de ces éléments (141, 142) est pourvu d'une ouverture (148, 149) globalement semi-circulaire s'étendant vers l'intérieur, les éléments (141, 142) sont pourvus de moyens d'articulation coopératifs (151, 152, 154, 155) sur lesquels les éléments de tête courbe (141, 142) pivotent pour former un élément creux globalement sphérique comprenant les premiers moyens formant tête (71), et pour amener les ouvertures semi-circulaires (148, 149) à se rejoindre et à former la première ouverture buccale (75), les éléments de tête courbes (141, 142) sont également pourvus de moyens d'encliquetage coopératifs (161, 162) pour assembler par encliquetage les éléments de tête courbes (141, 142), moyennant quoi lorsqu'on désenclenche les moyens d'encliquetage coopératifs (161, 162) et qu'on fait pivoter les éléments de tête courbes (141, 142) sur les moyens d'articulation coopératifs (151, 152, 154, 155) pour les éloigner l'un de l'autre, ladite paire d'éléments de tête courbes (141, 142) est globalement plate pour permettre d'empiler verticalement plusieurs premiers moyens formant tête (71).

25. Appareil selon la revendication 24, dans lequel les moyens d'articulation coopératifs (151, 152, 154, 155) comprennent plusieurs premiers éléments d'articulation (151, 152) courbes et s'étendant vers l'extérieur qui sont prévus sur l'un des éléments de tête courbes (141, 142), et plusieurs seconds éléments d'articulation (154, 155) s'étendant vers l'extérieur qui sont prévus sur l'autre élément de tête courbe (141, 142), les seconds éléments d'articulation (154, 155) étant pourvus d'ouvertures (156, 158) pour recevoir les premiers éléments d'articulation (151, 152).

26. Appareil selon la revendication 25, dans lequel des premiers éléments d'articulation (151, 152) voisins sont courbés à chaque fois dans des directions opposées.

27. Appareil selon la revendication 24, dans lequel les moyens d'articulation coopératifs (151, 152, 154, 155) comprennent des premiers moyens d'articulation coopératifs (151, 154) et des seconds moyens d'articulation coopératifs (152, 155), les premiers (151, 154) étant disposés sur un côté de la première ouverture buccale tandis que les seconds (152, 155) sont disposés sur l'autre côté de la première ouverture buccale (75).

28. Appareil selon la revendication 24, dans lequel les moyens d'encliquetage coopératifs (161, 162) comprennent plusieurs éléments d'encliquetage (161, 162) s'étendant vers l'extérieur qui sont prévus sur l'un des éléments de tête (141, 142), et plusieurs ouvertures d'encliquetage (165) qui sont prévues sur l'autre élément de tête (141, 142) pour recevoir les éléments d'encliquetage (161, 162) qui s'étendent vers l'extérieur.

29. Appareil selon la revendication 7, étant précisé que ledit appareil est également destiné à l'entraînement à la défibrillation automatique externe (DAE), qu'il comprend par ailleurs plusieurs électrodes DAE, que les moyens formant plastron, au moins, sont pourvus de repères anatomiques pour faciliter le positionnement correct des électrodes DAE sur l'appareil, que les repères anatomiques comprennent une saillie qui est prévue sur les moyens formant plastron et qui simule la clavicule humaine, un renfoncement prévu sur les moyens formant plastron et simulant le sternum humain, et une paire de saillies s'étendant vers l'extérieur, sur les moyens formant plastron, qui simulent les mamelons humains, et que les électrodes DAE sont pourvues d'un adhésif pour coller les électrodes aux moyens formant plastron et aux moyens formant torse.
